# EUROPEAN PATENT SPECIFICATION

(11) **EP 3 571 965 B1**
(45) Date of publication and mention of the grant of the patent: **24.02.2021**
(21) Application number: 17892394.2
(22) Date of filing: 31.08.2017
(51) Int. Cl.: A47J 31/36

(54) **COVER ACTUATING AND SELF-LOCKING DEVICE, BEVERAGE BREWING DEVICE, AND BEVERAGE BREWING SYSTEM**
ABDECKUNGSBETÄTIGUNGS- UND -SELBSTSPERRUNGSVORRICHTUNG, GETRÄNKEBRÜHVORRICHTUNG UND GETRÄNKEBRÜHSYSTEM
DISPOSITIF D'ACTIONNEMENT ET DE VERROUILLAGE AUTOMATIQUE DE COUVERCLE, DISPOSITIF D'INFUSION DE BOISSONS ET SYSTÈME D'INFUSION DE BOISSONS

(30) Priority: 22.01.2017 CN 201710053931
(43) Date of publication of application: 27.11.2019
(73) Proprietor: Guangdong Midea Consumer Electrics Manufacturing Co., Ltd., Foshan City, Guangdong 528311 (CN)
(72) Inventor: KUANG, Jian, Foshan Guangdong 528311 (CN)
(74) Representative: Lam, Alvin
(86) International application number: PCT/CN2017/099838
(87) International publication number: WO 2018/133419

(56) References cited:
- EP-A1- 1 000 574
- CN-A- 1 575 707
- CN-U- 202 714 727
- JP-B2- 4 526 155
- US-A1- 2013 223 965
- US-A1- 2014 033 927

## Description

### Field of the Invention

The present invention belongs to the field of home appliances, and particularly relates to a cover actuating and self-locking device, and a beverage brewing device and a beverage brewing system that have the cover actuating and self-locking device.

### Background of the Invention

When Italian high-pressure coffee is brewed with a coffee brewer, due to the high water pressure, the top seal ring of the brewing chamber where the beverage capsule is located must have enough downward pressure (usually up to 300Kg force) to maintain good sealing performance. Therefore, the structure of the brewing locking mechanism in conventional beverage brewing devices is usually complex, and is usually made of steel to provide high pressure and ensure stability and reliability, but such an approach also brings some drawbacks such as high cost, difficulty in disassembling, and residue in pipeline.

In view of those drawbacks, it is a new research and development direction to seek for a cheap brewing locking mechanism that is economical, reliable and easy to process.

US 2013/0223965 describes a pod disposal system and discloses a pod holder for holding a coffee pod which is operated by a lever via a system of guiding members and guide tracks.

### Summary of the Invention

In view of the above shortcomings or drawbacks in the prior art, the present invention provides a cover actuating and self-locking device, which has simple structure, easy to process and manufacture, has reliable working performance and low cost, and is suitable for use in beverage brewing devices.

To attain the above object, the present invention provides a cover actuating and self-locking device, which comprises a fixed frame, an actuating mechanism and a cover, wherein the actuating mechanism comprises a first lever, a second lever and a third lever that are hinged sequentially from the head end to the tail end, a fixed end of the first lever is hingedly connected to a fixed hinging point of the fixed frame, a bottom end of the third lever is hingedly connected to a cover hinging point on the top surface of the cover, the fixed frame is arranged with a stopping groove, and a stopping hinge shaft between the bottom end of the second lever and the top end of the third lever extends into the stopping groove and slides in the stopping groove;
wherein when the first lever rotates around the fixed hinging point in a locking rotation direction, it can push the stopping hinge shaft via the second lever to slide from a free end of the stopping groove to a locking end of the stopping groove, and can push the cover via the third lever to move downward from an upper locking position to a lower locking position; at the lower locking position, the cover is in a locked downward pressing state; when a line connecting a top-end hinging point and a bottom-end hinging point of the third lever rotates in the locking rotation direction, the included angle of rotation is not greater than 90 degrees.

According to the invention, at the upper locking position, in the top surface direction of the cover, the fixed hinging point and the stopping hinge shaft are at the same side of the cover hinging point; at the lower locking position, in the top surface direction of the cover, the fixed hinging point at one side of the cover hinging point, and the stopping hinge shaft at the locking end of the stopping groove is at the other side of the cover hinging point.

Optionally, the stopping groove is a straight groove, and the stopping groove is parallel to the top surface of the cover, or the free end of the stopping groove is above the locking end.

Optionally, the spacing between the fixed hinging point and the locking end of the stopping groove is not greater than the sum of the length of the first lever and the length of the second lever.

Particularly, the fixed frame comprises two vertical mounting clamp plates that protrude upward and are spaced from and parallel to each other, and the first lever, the second lever, the third lever, and the cover are located between the two vertical mounting clamp plates.

Optionally, the cover actuating and self-locking device comprises a first shaft and a second shaft that serve as the fixed shaft and a third shaft that serves as the stopping hinge shaft, the two vertical mounting clamp plates are provided with shaft mounting holes corresponding to the fixed hinging point, the two ends of the first shaft penetrate through the shaft mounting holes in the two vertical mounting clamp plates, a free end of the first lever and a top end of the second lever are pivotally connected to the second shaft, and a bottom end of the second lever and a top end of the third lever are pivotally connected to the third shaft.

Optionally, all of the first lever, the second lever, and the third lever are double levers that are connected to the two ends of the shafts and are spaced from and parallel to each other.

Optionally, each of the vertical mounting clamp plates is provided with a vertical cover guide slots, a sliding rod penetrating through the cover guide slots protrudes from the cover, and, at the lower locking position, the sliding rod is at the bottom end of the cover guide slots.

Optionally, the cover guide slots are arc slide slots; at the lower locking position, in the top surface direction of the cover, the arc centers of the arc slide slots and the fixed hinging point are at the same side of the cover hinging point.

Optionally, the cover actuating and self-locking device further comprises cover connecting rods, wherein one end of each cover connecting rod is hingedly connected to the sliding rod, and the other end of the cover connecting rod is hingedly connected to a position of a vertical mounting clamp plate corresponding to the arc center of the arc slide slot.

Optionally, at the lower locking position, the cover connecting rods are parallel to the top surface of the cover.

Optionally, the length of the cover connecting rods is 40mm-60mm.

Optionally, the cover actuating and self-locking device further comprises a fourth shaft penetrating through and connected to the top surface of the cover in the radial direction of the cover, and a bottom end of the third lever is pivotally connected to the fourth shaft.

Optionally, the sliding rod is an end part of the fourth shaft.

Optionally, the cover actuating and self-locking device further comprises an operating handle fixedly connected to the fixed end of the first lever and capable of driving the first lever to rotate around the first shaft in the locking rotation direction or rotate around the first shaft reversely in an unlocking rotation direction.

Optionally, when the cover is at the lower locking position, the operating handle is parallel to the cover.

Optionally, the cover actuating and self-locking device further comprises a compression spring, wherein one end of the compression spring is connected to the first shaft, and the other end of the compression spring is connected to the third shaft.

Optionally, the first shaft and the third shaft are metal shafts, while all other components of the cover actuating and self-locking device except the first shaft and the third shaft are made of a plastic material.

Optionally, at the lower locking position, in the top surface direction of the cover, the spacing between the stopping hinge shaft and the cover hinging point is 0.5mm-3mm, the spacing between the fixed-end hinging point and the free-end hinging point of the first lever is 14mm-20mm, the spacing between the top-end hinging point and the bottom-end hinging point of the second lever is 31mm-37mm, and, in the vertical direction of the top surface of the cover, the spacing between the top-end hinging point and the bottom-end hinging point of the third lever is 20mm-26mm.

Based on the above disclosure, the present invention further provides a beverage brewing device, which comprises a brewing cup and the cover actuating and self-locking device described above, wherein an inwardly recessed brewing chamber is formed in the top surface of the brewing cup, a piercing needle is mounted on the cover that serves as a brewing head; at the lower locking position, the cover covers the brewing chamber of the brewing cup in a sealed manner, and the piercing needle pierces into the brewing chamber.

Optionally, slide slots are formed in the bottom of the fixed frame, and the brewing cup is slidably mounted along the slide slots to the bottom of the fixed frame in a drawer form and can slide out from the bottom of the fixed frame.

Optionally, a seal ring is connected to the bottom of the cover, a top annular bearing platform is formed on the brewing chamber; at the lower locking position, the actuating mechanism actuates the seal ring to press against the top annular bearing platform.

Furthermore, the present invention provides a beverage brewing system, which comprises a liquid feed system, a beverage capsule, and the beverage brewing device described above, wherein the beverage capsule is accommodated in the brewing chamber, the piercing needle is a hollow needle tube and is connected to a liquid guide tube of the liquid feed system; at the lower locking position, the piercing needle pierces into the beverage capsule to inject liquid.

Optionally, the liquid pressure at which the piercing needle injects the liquid into the beverage capsule is not lower than 15bar.

Optionally, a seal ring is connected to the bottom of the cover, the beverage capsule comprises a sealing film for the top surface, the outer diameter of the sealing film is smaller than the outer diameter of the seal ring, a top annular bearing platform is formed on the brewing chamber, the rim of the sealing film extends into the annular bearing surface of the top annular bearing platform; at the lower locking position, the actuating mechanism actuates the seal ring to press against the annular bearing surface.

Optionally, a radial inner edge of the annular bearing surface is higher than a radial outer edge of the annular bearing surface.

With the above technical scheme, in the cover actuating and self-locking device in the present invention, a simple three-lever mechanism is utilized to actuate the cover to move up and down. Especially, at the lower locking position, by appropriately designing the relative mounting position of the three-lever mechanism on the fixed frame and the stopping groove, etc., a self-locking effect with high locking force can be attained, and thereby the cover can be locked at the lower locking position and can bear high pressure. Therefore, the cover actuating and self-locking device is suitable for used in a beverage brewing device to press a seal ring on the opening of the top surface of a brewing chamber so as to effectively seal the brewing chamber. The cover actuating and self-locking device has a simple structure, involves less components, and is easy to process and manufacture; in addition, only one or two shafts that bear higher load are made of a steel material, while all other steels are made of a plastic material. Therefore, the entire device is light in weight and low in cost.

Other features and advantages of the present invention will be further detailed in the embodiments hereunder.

### Brief Description of Drawings

The accompanying drawings, which constitute a part of the present invention, are used to provide a further understanding of the present invention. The illustrative embodiments of the present invention and their description are used to explain the present invention, but don't constitute any undue limitation to the present invention. In the figures:
Fig. 1 is an exploded view of the cover actuating and self-locking device and the beverage brewing device in a detailed embodiment of the present invention;
Fig. 2 is a schematic structural diagram of the assembled cover actuating and self-locking device in Fig. 1 in an open state, with a part of the fixed frame omitted for a clarity purpose;
Fig. 3 is a front view of the brewing cup in Fig. 1;
Fig. 4 is a sectional view of the brewing cup after a beverage capsule is loaded into the brewing cup;
Fig. 5 is a front view of the cover actuating and self-locking device in an open state shown in Fig. 2, illustrating the brewing cup filled with a beverage capsule;
Fig. 6 is a sectional view of the cover actuating and self-locking device in Fig. 5, with a part of the fixed frame omitted for a clarity purpose;
Fig. 7 is a front view of the cover actuating and self-locking device in a locked state, illustrating the brewing cup filled with a beverage capsule;
Fig. 8 is a sectional view of the cover actuating and self-locking device in Fig. 7, with a part of the fixed frame omitted for a clarity purpose.

**Reference Numbers**

| | | | |
|---|---|---|---|
| 1 | first lever | 2 | second lever |
| 3 | third lever | 4 | cover |
| 5 | cover connecting rod | 6 | operating handle |
| 7 | compression spring | 8 | brewing cup |
| 9 | beverage capsule | 10 | seal ring |
| 11 | piercing needle | 41 | sliding rod |
| 81 | top annular bearing platform | 91 | sealing film |
| 100 | fixed frame | 101 | first vertical mounting clamp plate |
| 102 | second vertical mounting clamp plate | 103 | stopping groove |
| 104 | shaft mounting hole | 105 | cover guide slot |
| Z1 | first shaft | Z2 | second shaft |
| Z3 | third shaft | Z4 | fourth shaft |
| J1 | fixed hinging point | J2 | second hinging point |
| J3 | third hinging point | J4 | cover hinging point |
| J5 | fifth hinging point | α | angle of rotation |
| w | locking rotation direction | S | locking end |

### Detailed Description of the Embodiments

Hereunder some embodiments of the present invention will be detailed with reference to the accompanying drawings. It should be understood that the embodiments described here are only provided to describe and explain the present invention rather than constitute any limitation to the present invention.

It is noted that the embodiments and the features in the embodiments in the present invention can be combined freely, provided that there is no confliction between them.

In the present invention, unless otherwise specified, the words that denote directions or orientations, such as "above", "below", "top", and "bottom", etc., are usually used to describe the relative position relations among the components with respect to the direction shown in the accompanying drawings or the vertical, plumb, or gravity direction.

Hereunder the present invention will be detailed in an embodiment with reference to the accompanying drawings.

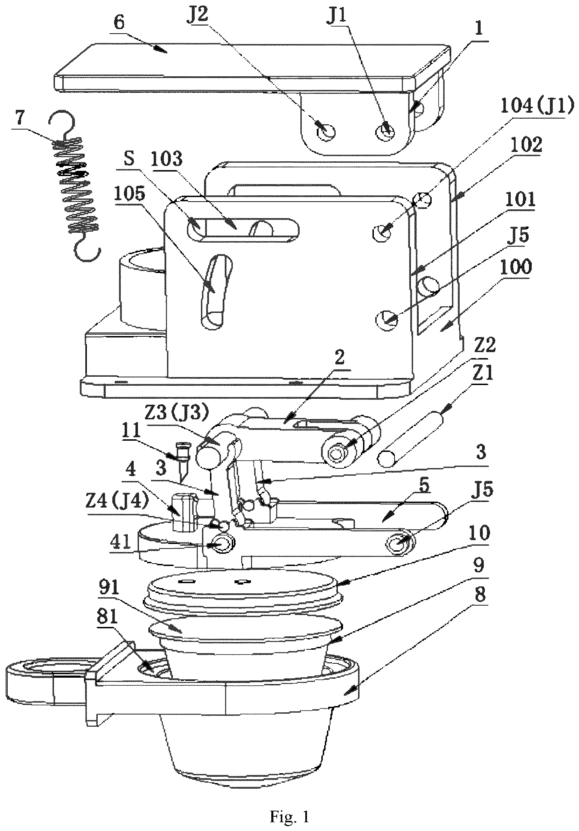

As shown in Figs. 1-8, the present invention provides a cover actuating and self-locking device, which comprises a fixed frame 100, an actuating mechanism and a cover 4, wherein the actuating mechanism comprises a first lever 1, a second lever 2 and a third lever 3 that are hinged sequentially from the head end to the tail end, a fixed end of the first lever 1 is hingedly connected to a fixed hinging point J1 of the fixed frame 100, a bottom end of the third lever 3 is hingedly connected to a cover hinging point J4 on the top surface of the cover 4, the fixed frame 100 is arranged with a stopping groove 103, and a stopping hinge shaft between the bottom end of the second lever 2 and the top end of the third lever 3 extends into the stopping groove 103 and slides in the stopping groove 103;

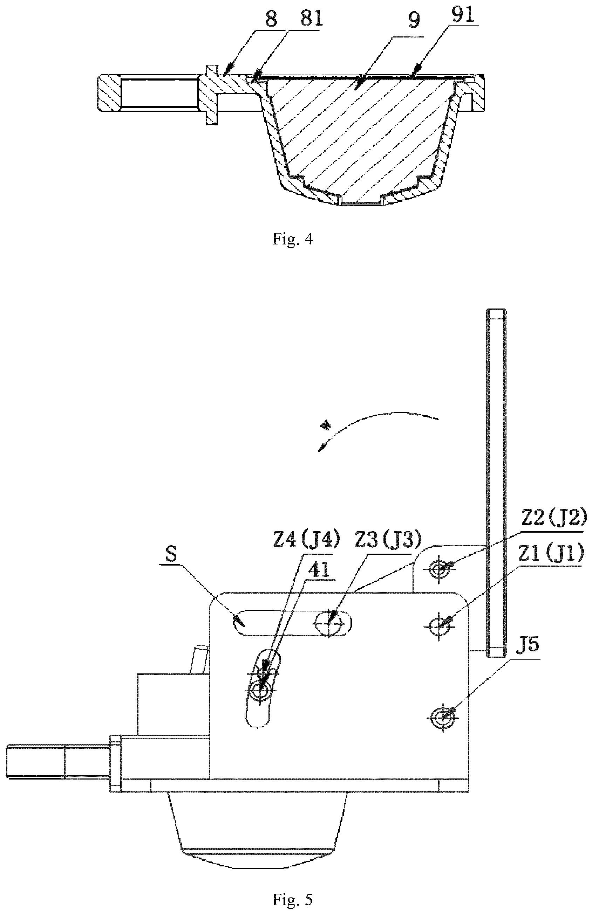

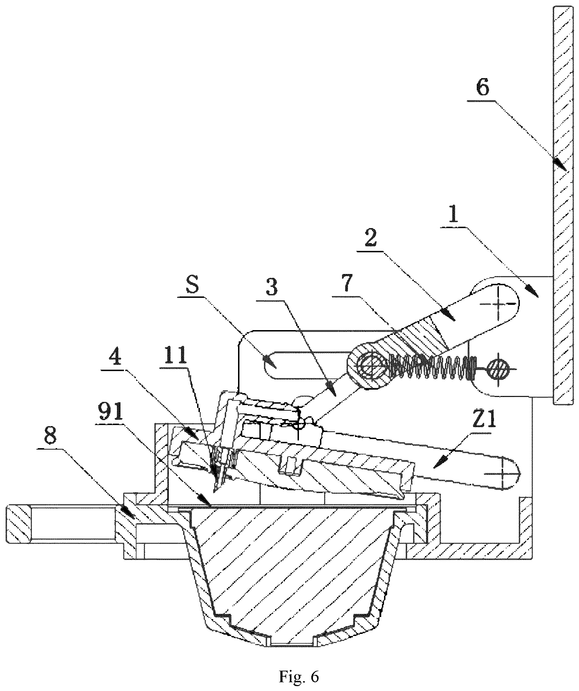

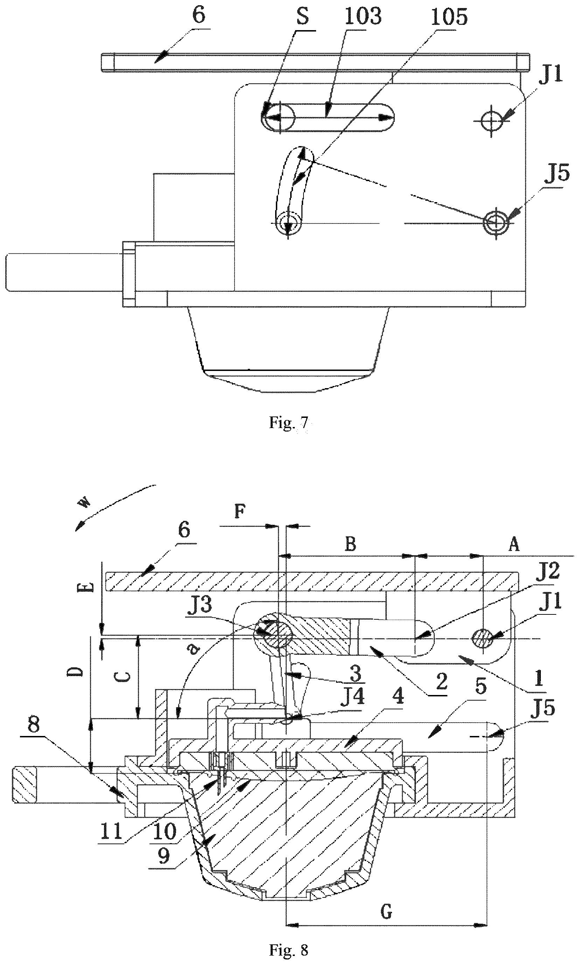

Wherein, as shown in Figs. 5, 6, 7, and 8, when the first lever 1 rotates around the fixed hinging point J1 in a locking rotation direction w, it can push the stopping hinge shaft 103 via the second lever 2 to slide from a free end of the stopping groove 103 to a locking end S of the stopping groove 103, and can push the cover 4 via the third lever 3 to move downward from an upper locking position a lower locking position. At the upper locking position shown in Figs. 5 and 6, the cover 4 is in an upward lifted open state; at the lower locking position shown in Figs. 7 and 8, the cover 4 is in a locked downward pressing state; when a line connecting a top-end hinging point and a bottom-end hinging point of the third lever 3 rotates in a locking rotation direction w so that the line is aligned with the plane of a top surface of the cover 4, the included angle of rotation α is not greater than 90 degrees, and that included angle of rotation α is a locking angle.

Specifically, as shown in Fig. 8, in a case that the illustrated locking rotation direction w is the counter-clockwise direction in the plane of the paper, if the third hinging point J3 is slightly left to the cover hinging point J4, here the upward pressure applied on the cover hinging point J4 can only urge the third hinging point J3 to move leftward along the stopping groove 103; however, since the third hinging point J3 is at the locking end S at the left end of the stopping groove 103 now, it can't move leftward further. Thus, a stable and reliable mechanical locking purpose is attained.

Apparently, the cover actuating and self-locking device in the present invention is a tree-lever actuating mechanism with a self-locking function, and it utilizes an optimal arrangement of the hinging point positions and an optimal design of slide slots at the hinging points (e.g., stopping groove 103 and cover guide slot 105) to achieve effective stroke control and locking features. Though the structure of the device in the present invention is simple, it achieves quite reliable mechanical locking, and the shafts can move smoothly and reliably in the slide slots at corresponding hinging points.

In the aspect of the arrangement of the hinging point positions, it should be noted: as shown in Figs. 5 and 6, at the upper locking position, in the top surface direction of the cover 4, the fixed hinging point J1 and the stopping hinge shaft shall be at the same side of the cover hinging point J4; at the lower locking position as shown in Figs. 7 and 8, in the top surface direction of the cover 4, the fixed hinging point J1 shall be at one side of the cover hinging point J4, and the stopping hinge shaft at the locking end S of the stopping groove 103 shall be right above the cover hinging point J4 or at the other side of the cover hinging point J4.

In the aspect of optimization design of the slide slots at the hinging points, as shown in Fig. 8, the stopping groove 103 is approximately horizontal, the cover guide slot 105 is in an arc shape, and extends upward toward the stopping groove 103. Thus, if the cover 4 moves upward along the cover guide slot 105 under pressure, a dead point of travel will be created and the cover 4 will be locked since the third hinging point J3 can't move leftward further along the stopping groove 103.

Wherein, the stopping groove 103 optionally is a groove. At the lower locking position, the stopping groove 103 optionally is parallel to the top surface of the cover 4. Alternatively, in a case that the stopping groove 103 is an inclined groove, the free end of the stopping groove 103 shall be higher than the locking end S, i.e., the free end is tilted upward, so that the lever mechanism can be released from the dead point position and return to an unlocked position and thereby unlocking can be realized when the operating handle 6 is pulled in an unlocking rotation direction that is reversed to the locking rotation direction w.

Wherein, in the operating process of the lever mechanism, the fixed hinging point J1, the second hinging point J2, and the third hinging point J3 optionally form a triangular shape, so that the third hinging point J3 can be pushed effectively to move along the stopping groove 103 when the operating handle 6 is operated; even at the locked position shown in Fig. 8, the stopping hinge shaft at the third hinging point J3 (i.e., the third shaft Z3) is still subjected to the thrust force of the second lever at the locking end and thereby is locked at the locking end S of the stopping groove 103. To that end, the spacing between the fixed hinging point J1 and the locking end S of the stopping groove 103 shall not greater than a sum of the length of the first lever 1 and the length of the second lever 2.

The slide slots at the hinging points shall be formed in the fixed frame 100. As a detailed example, the fixed frame 100 shown in Fig. 1 comprises two vertical mounting clamp plates that protrude upward and are spaced from and parallel to each other, and the first lever 1, the second lever 2, the third lever 3, and the cover 4 are located between the two vertical mounting clamp plates. Such a fixed frame 100 with two mounting clamp plates is not only helpful for the arrangement of the slide slots at the hinging points, but also ensures smooth and steady operation of the levers.

Furthermore, the cover actuating and self-locking device comprises a first shaft Z1 and a second shaft Z2 that serve as the fixed shaft and a third shaft Z3 that serves as the stopping hinge shaft, the two vertical mounting clamp plates are provided with shaft mounting holes 104 corresponding to the fixed hinging point J1, the two ends of the first shaft Z1 penetrate through the shaft mounting holes 104 in the two vertical mounting clamp plates, a free end of the first lever 1 and a top end of the second lever 2 are pivotally connected to the second shaft Z2, and a bottom end of the second lever 2 and a top end of the third lever 3 are pivotally connected to the third shaft Z3. With such a fixed frame 100 with two mounting clamp plates, the stress at the hinging points is shared via corresponding shafts to the two mounting clamp plates, and thereby the stress on the load-bearing components is lower, and the requirement for the strength and rigidity of the materials can be decreased.

To further reduce the stress on the first lever 1, the second lever 2, and the third lever 3 that serve as main load-bearing components, all of the link roads optionally are double rods that are connected to the two ends of the shaft and spaced from and parallel to each other. In that way, the stress on the levers is reduced, and the levers may be made of a plastic material. Of course, if the space permits, each of the levers may even be composed of more rods, such as three parallel rods or four parallel rods.

To enable and regulate the cover 4 and the cover hinging point J4 to move smoothly so as to attain a purpose of reliable locking and unlocking, as shown in Fig. 1, a vertical cover guide slot 105 is arranged in each vertical mounting clamp plate, sliding rod 41 penetrating through the cover guide slot 105 protrudes from the cover 4, and, at the lower locking position shown in Fig. 8, the sliding rod 41 is at the bottom end of the cover guide slot 105.

Optionally, the cover guide slot 105 is an arc slide slot; at the lower locking position shown in Figs. 7 and 8, in the top surface direction of the cover 4 (i.e., the horizontal direction shown in Figs. 7 and 8), the arc center of the arc slide slot (i.e., the position of the fifth hinging point J5 in Fig. 7) and the fixed hinging point J1 shall be at the same side of the cover hinging point J4, so that the cover guide slot 105 extends toward the stopping groove 103 at the lower locking position, and thereby locking is realized as described above.

At that point, to guide the sliding rod 41 of the cover 4 to move along the cover guide slot 105, the cover actuating and self-locking device further comprises cover connecting rods 5, wherein one end of each cover connecting rod 5 is hingedly connected to the sliding rod 41, and the other end of the cover connecting rod 5 is hingedly connected to a position of the vertical mounting clamp plate corresponding to the arc center of the arc slide slot (i.e., the position of the fifth hinging point J5 in Fig. 7).

Furthermore, the cover actuating and self-locking device further comprises a fourth shaft Z4 penetrating through and connected to the top surface of the cover 4 in the radial direction of the cover 4, and a bottom end of the third lever 3 is pivotally connected to the fourth shaft Z4. Wherein, optionally the sliding rod 41 is an end part of the fourth shaft Z4, i.e., the sliding rod 41 and the fourth shaft Z4 may be combined into one component.

The cover actuating and self-locking device further comprises an operating handle 6 for manual manipulation. The operating handle 6 is fixedly connected to the fixed end of the first lever 1 and capable of driving the first lever 1 to rotate around the first shaft Z1 in the locking rotation direction w or rotate around the first shaft Z1 reversely in an unlocking rotation direction. Wherein, optionally the operating handle 6 is parallel to the cover 4 when the cover 4 is at the lower locking position, as shown in Figs. 7 and 8, to adapt to the operating habit of the user and facilitate the control. Furthermore, the cover actuating and self-locking device further comprises a compression spring 7, as shown in Figs. 1 and 6, wherein one end of the compression spring 7 is connected to the first shaft Z1, and the other end of the compression spring 7 is connected to the third shaft Z3. The compression spring 7 is helpful for providing pre-tightening force for reset during unlocking, so that the operating handle 6 can return from the locked position in Fig. 7 to the unlocked position in Fig. 5.

With the fixed frame 100 with two vertical mounting clamp plates, the stress on the parallel multi-rod levers and the shafts are effectively shared. Therefore, only the first shaft Z1 and the third shaft Z3 that bear a higher load are metal shafts that have higher structural strength and rigidity, while all other components of the cover actuating and self-locking device except the first shaft Z1 and the third shaft Z3 may be made of a plastic material, so as to reduce the cost.

In a specific embodiment, at the lower locking position shown in Fig. 8, the cover connecting rod 5 optionally is parallel to the top surface of the cover 4. The length G of the cover connecting rods optionally is 40mm-60mm. At the lower locking position, in the top surface direction of the cover 4, the horizontal spacing F between the stopping hinge shaft and the cover hinging point J4 is 0.5mm-3mm, the spacing A between the fixed-end hinging point and the free-end hinging point of the first lever 1 is 14mm-20mm, the spacing B between the top-end hinging point and the bottom-end hinging point of the second lever 2 is 31mm-37mm; in the vertical direction of the top surface of the cover 4, the spacing C between the top-end hinging point and the bottom-end hinging point of the third lever 3 is 20mm-26mm, and the spacing E between the fixed hinging point J1 and the third hinging point J3 is 0mm-2mm. The thickness D of the cover 4 is 13mm-17mm. Apparently, the cover actuating and self-locking device in the present invention is small in size, compact in structure, and made of a plastic material almost entirely, and has low cost, but can apply great downward pressure to the cover 4 and achieve stable and reliable mechanical self-locking.

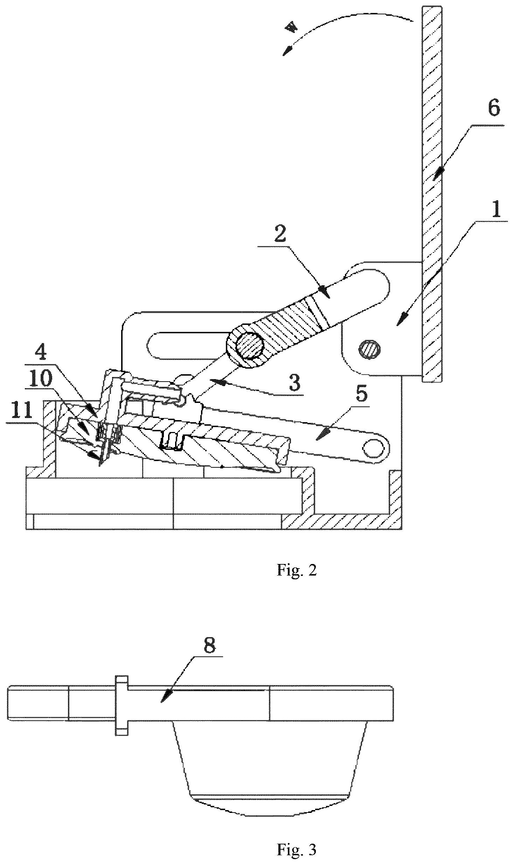

The cover actuating and self-locking device in the present invention is suitable for use as a brewing head in a beverage brewing device, can work with the brewing cup 8 shown in Fig. 3 and seal the opening of the top surface of the brewing cup 8 by means of a downward pressing seal ring 10, so as to lock the beverage capsule 9 in the brewing chamber of the brewing cup 8 as shown in Fig. 4.

Specifically, an inwardly recessed brewing chamber is formed in the top surface of the brewing cup 8, a piercing needle 11 is mounted on the cover 4 that serves as a brewing head; at the lower locking position, the cover 4 covers and seals the brewing chamber of the brewing cup 8, the piercing needle 11 pierces into the brewing chamber and is inserted into the beverage capsule 9 to inject high-pressure liquid for beverage brewing.

Wherein, optionally lateral slide slots are formed in the bottom of the fixed frame 100; thus, the brewing cup 8 may be slideably mounted to the bottom of the fixed frame 100 along the lateral slide slots in a drawer form and can slide out from the bottom of the fixed frame 100. Utilizing such drawer-type mounting of the brewing cup 8, the brewing cup 8 can be separated from the brewing device, so that the beverage capsule 9 can be replaced conveniently.

A seal ring 10 may be directly connected to the bottom of the cover 4, and a top annular bearing platform 81 is formed on the brewing chamber, as shown in Fig. 1. At the lower locking position in Fig. 8, the actuating mechanism of the cover actuating and self-locking device actuates the seal ring 10 to abut against the top annular bearing platform 81, and thereby forms a hermetically-sealed bell-mount structure.

In a beverage brewing system that employs the beverage brewing device, usually the beverage brewing system further comprises a liquid feed system, the beverage capsule 9 is accommodated in the brewing chamber, and the piercing needle 11 optionally is a hollow needle tube and is connected to a liquid guide tube of the liquid feed system. In that way, at the lower locking position, the piercing needle 11 pierces into the beverage capsule 9 under the downward pressure of the brewing head to inject high-pressure liquid.

Wherein, the beverage capsule 9 further comprises a sealing film 91 for the top surface, wherein the outer diameter of the sealing film 91 is smaller than the outer diameter of the seal ring 10, and the rim of the sealing film 91 extends into the annular bearing surface of the top annular bearing platform 81. Thus, at the lower locking position, the actuating mechanism actuates the seal ring 10 to abut against the annular bearing surface, and thereby the rim of the sealing film 91 is also sealed and fixed. More particularly, the radial inner edge of the annular bearing surface of the top annular bearing platform 81 is slightly higher than the radial outer edge of the annular bearing surface. Thus, when the seal ring 10 presses downward, not only the rim of the sealing film 91 is supported more reliably, but also a better sealing effect is attained.

In a beverage brewing device utilizing the cover actuating and self-locking device in the present invention, the sealing pressure of the brewing head is high enough, up to 300Kg force, and the liquid pressure at which the piercing needle 11 injects liquid into the beverage capsule 9 is not lower than 15bar. However, the device provided in the present invention is absolutely application to such a beverage brewing device.

While the present invention is described above in some detailed embodiments, the present invention is not limited to those embodiments. Any modification, equivalent replacement, or improvement, etc., made without departing from the scope of the present invention as defined by the appended claims. For example, the brewing cup 8 is not limited to be mounted to the bottom of the fixed frame 100 in a drawer form; instead, a vertical slide slot may be arranged on the fixed frame 100, so that the brewing cup 8 can be lifted up and replaced, or even the brewing cup 8 may be mounted by snap fitting, etc.

## Claims

1. A cover actuating and self-locking device, comprising
a cover (4), provided with a cover hinging point (J4) on the top surface thereof;
a fixed frame (100), arranged with a stopping groove (103) and a fixed hinging point (J1); and
an actuating mechanism, comprising a first lever (1), a second lever (2) and a third lever (3) that are hinged sequentially from the head end to the tail end, a fixed end of the first lever (1) is hingedly connected to the fixed hinging point (J1), a bottom end of the third lever (3) is hingedly connected to the cover hinging point (J4), a stopping hinge shaft between the bottom end of the second lever (2) and the top end of the third lever (3) extends into the stopping groove (103) and slides in the stopping groove (103);
wherein, when the first lever (1) rotates around the fixed hinging point (J1) in a locking rotation direction (w), it can push the stopping hinge shaft via the second lever (2) to slide from a free end of the stopping groove (103) to a locking end (S) of the stopping groove (103), and can push the cover (4) via the third lever (3) to move downward from an upper locking position to a lower locking position; at the lower locking position, the cover (4) is in a locked downward pressing state; when a line connecting a top-end hinging point (J3) and a bottom-end hinging point of the third lever (3) rotates in the locking rotation direction (w), the included angle of rotation (α) of the top-end hinging point (J3) is not greater than 90 degrees at the locking position, wherein at the upper locking position, in the top surface direction of the cover (4), the fixed hinging point (J1) and the stopping hinge shaft are the same side of the cover hinging point (J4);
**characterized in that**, at the lower locking position, in the top surface direction of the cover (4), the fixed hinging point (J1) at one side of the cover hinging point (J4), and the stopping hinge shaft at the locking end (S) of the stopping groove (103) is at the other side of the cover hinging point (J4).

2. The cover actuating and self-locking device according to claim 1, wherein, the stopping groove (103) is a straight groove, and the stopping groove (103) is parallel to the top surface of the cover (4), or the free end of the stopping groove (103) is above the locking end (S), optionally, the spacing between the fixed hinging point (J1) and the locking end (S) of the stopping groove (103) is not greater than the sum of the length of the first lever (1) and the length of the second lever (2).

3. The cover actuating and self-locking device according to any of claims 1 -2, wherein, the fixed frame (100) comprises two vertical mounting clamp plates that protrude upward and are spaced from and parallel to each other, and the first lever (1), the second lever (2), the third lever (3), and the cover (4) are located between the two vertical mounting clamp plates.

4. The cover actuating and self-locking device according to claim 3, comprising a first shaft (Z1) and a second shaft (Z2) that serve as the fixed shaft and a third shaft (Z3) that serves as the stopping hinge shaft, the two vertical mounting clamp plates are provided with shaft mounting holes (104) corresponding to the fixed hinging point (J1), the two ends of the first shaft (Z1) penetrate through the shaft mounting holes (104) in the two vertical mounting clamp plates, a free end of the first lever (1) and a top end of the second lever (2) are pivotally connected to the second shaft (Z2), and a bottom end of the second lever (2) and a top end of the third lever (3) are pivotally connected to the third shaft (Z3), optionally, all of the first lever (1), the second lever (2), and the third lever (3) are double levers that are connected to the two ends of the shafts and are spaced from and parallel to each other.

5. The cover actuating and self-locking device according to claim 4, wherein, each of the vertical mounting clamp plates is provided with a vertical cover guide slot (105), a sliding rod (41) penetrating through the cover guide slots (105) protrudes from the cover (4), and, at the lower locking position, the sliding rod (41) is at the bottom end of the cover guide slots (105);
optionally, the cover guide slots (105) are arc slide slots; at the lower locking position, in the top surface direction of the cover (4), the arc centers of the arc slide slots and the fixed hinging point (J1) are at the same side of the cover hinging point (J4);
optionally, the device further comprises cover connecting rods (5), wherein one end of each cover connecting rod (5) is hingedly connected to the sliding rod (41), and the other end of the cover connecting rod (5) is hingedly connected to a position of the vertical mounting clamp plate corresponding to the arc center of the arc slide slot.

6. The cover actuating and self-locking device according to claim 5, wherein, at the lower locking position, the cover connecting rods (5) are parallel to the top surface of the cover (4), and/or, the length of the cover connecting rods (5) is 40mm-60mm.

7. The cover actuating and self-locking device according to claim 5, further comprises a fourth shaft (Z4) penetrating through and connected to the top surface of the cover (4) in the radial direction of the cover (4), and a bottom end of the third lever (3) is pivotally connected to the fourth shaft (Z4), optionally, the sliding rod (41) is an end part of the fourth shaft (Z4).

8. The cover actuating and self-locking device according to claim 4, further comprising an operating handle (6) fixedly connected to the fixed end of the first lever (1) and capable of driving the first lever (1) to rotate around the first shaft (Z1) in the locking rotation direction (w) or rotate around the first shaft (Z1) reversely in an unlocking rotation direction, optionally, when the cover (4) is at the lower locking position, the operating handle (6) is parallel to the cover (4).

9. The cover actuating and self-locking device according to claim 4, further comprising a compression spring (7), wherein one end of the compression spring (7) is connected to the first shaft (Z1), and the other end of the compression spring (7) is connected to the third shaft (Z3), and/or, the first shaft (Z1) and the third shaft (Z3) are metal shafts, while all other components of the cover actuating and self-locking device except the first shaft (Z1) and the third shaft (Z3) are made of a plastic material.

10. The cover actuating and self-locking device according to claim 1, wherein, at the lower locking position, in the top surface direction of the cover (4), the spacing between the stopping hinge shaft and the cover hinging point (J4) is 0.5mm-3mm, the spacing between the fixed-end hinging point and the free-end hinging point of the first lever (1) is 14mm-20mm, the spacing between the top-end hinging point and the bottom-end hinging point of the second lever (2) is 31mm-37mm, and, in the vertical direction of the top surface of the cover (4), the spacing between the top-end hinging point and the bottom-end hinging point of the third lever (3) is 20mm-26mm.

11. A beverage brewing device, comprising a brewing cup (8) and the cover actuating and self-locking device according to any of claims 1 - 10 , wherein an inwardly recessed brewing chamber is formed in the top surface of the brewing cup (8), a piercing needle (11) is mounted on the cover (4) that serves as a brewing head; at the lower locking position, the cover (4) covers the brewing chamber of the brewing cup (8) in a sealed manner, and the piercing needle (11) pierces into the brewing chamber.

12. The beverage brewing device according to claim 11, wherein, slide slots are formed in the bottom of the fixed frame (100), and the brewing cup (8) is slidably mounted along the slide slots to the bottom of the fixed frame (100) in a drawer form and can slide out from the bottom of the fixed frame (100), optionally, a seal ring (10) is connected to the bottom of the cover (4), and a top annular bearing platform (81) is formed on the brewing chamber; at the lower locking position, the actuating mechanism actuates the seal ring (10) to press against the top annular bearing platform (81).

13. A beverage brewing system, comprising a liquid feed system, a beverage capsule (9), and the beverage brewing device according to claim 11 or 12, wherein, the beverage capsule (9) is accommodated in the brewing chamber, the piercing needle (11) is a hollow needle tube and is connected to a liquid guide tube of the liquid feed system; at the lower locking position, the piercing needle (11) pierces into the beverage capsule (9) to inject liquid, optionally, the liquid pressure at which the piercing needle (11) injects the liquid into the beverage capsule (9) is not lower than 15bar.

14. The beverage brewing system according to claim 13, wherein, a seal ring (10) is connected to the bottom of the cover (4), the beverage capsule (9) comprises a sealing film (91) for the top surface, the outer diameter of the sealing film (91) is smaller than the outer diameter of the seal ring (10), a top annular bearing platform (81) is formed on the brewing chamber, and the rim of the sealing film (91) extends into the annular bearing surface of the top annular bearing platform (81); at the lower locking position, the actuating mechanism actuates the seal ring (10) to press against the annular bearing surface, optionally, a radial inner edge of the annular bearing surface is higher than a radial outer edge of the annular bearing surface.

## Patentansprüche

1. Abdeckungsbetätigungs- und -selbstverriegelungsvorrichtung, die Folgendes umfasst:
eine Abdeckung (4), die mit einem Abdeckungsanlenkpunkt (J4) auf der oberen Oberfläche derselben versehen ist;
einen festen Rahmen (100), der mit einer Anschlagrille (103) und einem festen Anlenkpunkt (J1) angeordnet ist; und
einen Betätigungsmechanismus, umfassend einen ersten Hebel (1), einen zweiten Hebel (2) und einen dritten Hebel (3), die nacheinander vom Kopfende zum Schwanzende angelenkt sind, wobei ein festes Ende des ersten Hebels (1) gelenkig mit dem festen Anlenkpunkt (J1) verbunden ist, ein unteres Ende des dritten Hebels (3) gelenkig mit dem Abdeckungsanlenkpunkt (J4) verbunden ist, sich eine Anschlaggelenkachse zwischen dem unteren Ende des zweiten Hebels (2) und dem oberen Ende des dritten Hebels (3) in die Anschlagrille (103) erstreckt und in der Anschlagrille (103) gleitet;
wobei, wenn sich der erste Hebel (1) um den festen Anlenkpunkt (J1) in einer Verriegelungsdrehrichtung (w) dreht, er die Anschlaggelenkachse mittels des zweiten Hebels (2) schieben kann, um von einem freien Ende der Anschlagrille (103) zu einem Verriegelungsende (S) der Anschlagrille (103) zu gleiten, und die Abdeckung (4) mittels des dritten Hebels (3) schieben kann, um sich aus einer oberen Verriegelungsstellung in eine untere Verriegelungsstellung nach unten zu bewegen;
wobei sich in der unteren Verriegelungsstellung die Abdeckung (4) in einem verriegelten, nach unten drückenden Zustand befindet; wobei, wenn sich eine Linie, die einen Anlenkpunkt (J3) am oberen Ende und einen Anlenkpunkt am unteren Ende des dritten Hebels (3) verbindet, in der Verriegelungsdrehrichtung (w) dreht, der eingeschlossene Drehwinkel (α) des Anlenkpunkts (J3) am oberen Ende in der Verriegelungsstellung nicht größer als 90 Grad ist, wobei in der oberen Verriegelungsstellung, in der Richtung der oberen Oberfläche der Abdeckung (4), der feste Anlenkpunkt (J1) und die Anschlaggelenkachse auf derselben Seite des Abdeckungsanlenkpunkts (J4) liegen;
**dadurch gekennzeichnet, dass**
in der unteren Verriegelungsstellung, in der Richtung der oberen Oberfläche der Abdeckung (4), der feste Anlenkpunkt (J1) auf einer Seite des Abdeckungsanlenkpunkts (J4) liegt und die Anschlaggelenkachse an dem Verriegelungsende (S) der Anschlagrille (103) auf der anderen Seite des Abdeckungsanlenkpunkts (J4) liegt.

2. Abdeckungsbetätigungs- und -selbstverriegelungsvorrichtung nach Anspruch 1, wobei es sich bei der Anschlagrille (103) um eine gerade Rille handelt und die Anschlagrille (103) parallel zu der oberen Oberfläche der Abdeckung (4) ist, oder das freie Ende der Anschlagrille (103) über dem Verriegelungsende (S) liegt, wobei optional der Abstand zwischen dem festen Anlenkpunkt (J1) und dem Verriegelungsende (S) der Anschlagrille (103) nicht größer als die Summe der Länge des ersten Hebels (1) und der Länge des zweiten Hebels (2) ist.

3. Abdeckungsbetätigungs- und -selbstverriegelungsvorrichtung nach einem der Ansprüche 1-2, wobei der feste Rahmen (100) zwei vertikale Befestigungsklemmplatten umfasst, die nach oben ragen und voneinander beabstandet und parallel zueinander sind, und wobei sich der erste Hebel (1), der zweite Hebel (2), der dritte Hebel (3) und die Abdeckung (4) zwischen den zwei vertikalen Befestigungsklemmplatten befinden.

4. Abdeckungsbetätigungs- und -selbstverriegelungsvorrichtung nach Anspruch 3, umfassend eine erste Achse (Z1) und eine zweite Achse (Z2), die als die feste Achse dienen, und eine dritte Achse (Z3), die als die Anschlaggelenkachse dient, wobei die zwei vertikalen Befestigungsklemmplatten mit dem festen Anlenkpunkt (J1) entsprechenden Achsenbefestigungslöchern (104) versehen sind, die zwei Enden der erste Achse (Z1) durch die Achsenbefestigungslöcher (104) in den zwei vertikalen Befestigungsklemmplatten durchdringen, eine freies Ende des ersten Hebels (1) und ein oberes Ende des zweiten Hebels (2) drehbar mit der zweiten Achse (Z2) verbunden sind und ein unteres Ende des zweiten Hebels (2) und ein oberes Ende des dritten Hebels (3) drehbar mit der dritten Achse (Z3) verbunden sind, wobei es sich optional bei dem ersten Hebel (1), dem zweiten Hebel (2) und dem dritten Hebel (3) jeweils um Doppelhebel handelt, die mit den zwei Enden der Achsen verbunden sind und voneinander beabstandet und parallel zueinander sind.

5. Abdeckungsbetätigungs- und -selbstverriegelungsvorrichtung nach Anspruch 4, wobei die vertikalen Befestigungsklemmplatten jeweils mit einer vertikalen Abdeckungsführungsnut (105) versehen sind, eine die Abdeckungsführungsnuten (105) durchdringende Gleitstange (41) von der Abdeckung vorsteht (4) und in der unteren Verriegelungsstellung sich die Gleitstange (41) an dem unteren Ende der Abdeckungsführungsnuten (105) befindet;
wobei es sich optional bei den Abdeckungsführungsnuten (105) um Bogengleitnuten handelt, in der unteren Verriegelungsstellung, in der Richtung der oberen Oberfläche der Abdeckung (4), die Bogenmittelpunkte der Bogengleitnuten und der feste Anlenkpunkt (J1) auf derselben Seite des Abdeckungsanlenkpunkts (J4) liegen;
wobei optional die Vorrichtung ferner Abdeckungsverbindungsstangen (5) umfasst, wobei ein Ende jeder Abdeckungsverbindungsstange (5) gelenkig mit der Gleitstange (41) verbunden ist und das andere Ende der Abdeckungsverbindungsstange (5) gelenkig mit einer dem Bogenmittelpunkt der Bogenführungsnut entsprechenden Stelle der vertikalen Befestigungsklemmplatte verbunden ist.

6. Abdeckungsbetätigungs- und -selbstverriegelungsvorrichtung nach Anspruch 5, wobei in der unteren Verriegelungsstellung die Abdeckungsverbindungsstangen (5) parallel zu der oberen Oberfläche der Abdeckung (4) sind und/oder die Länge der Abdeckungsverbindungsstangen (5) 40 mm-60 mm beträgt.

7. Abdeckungsbetätigungs- und -selbstverriegelungsvorrichtung nach Anspruch 5, ferner umfassend eine vierte Achse (Z4), die die obere Oberfläche der Abdeckung (4) in der Radialrichtung der Abdeckung (4) durchdringt und damit verbunden ist, und wobei ein unteres Ende des dritten Hebels (3) drehbar mit der vierten Achse (Z4) verbunden ist, wobei es sich optional bei der Gleitstange (41) um einen Endteil der vierten Achse (Z4) handelt.

8. Abdeckungsbetätigungs- und -selbstverriegelungsvorrichtung nach Anspruch 4, ferner umfassend einen Bedienungsgriff (6), der fest mit dem festen Ende des ersten Hebels (1) verbunden ist und in der Lage ist, den ersten Hebel (1) anzutreiben, um sich in der Verriegelungsdrehrichtung (w) um die erste Achse (Z1) zu drehen oder sich umgekehrt in einer Entriegelungsdrehrichtung um die erste Achse (Z1) zu drehen, wobei optional, wenn sich die Abdeckung (4) in der unteren Verriegelungsstellung befindet, der Bedienungsgriff (6) zu der Abdeckung (4) parallel ist.

9. Abdeckungsbetätigungs- und -selbstverriegelungsvorrichtung nach Anspruch 4, ferner umfassend eine Druckfeder (7), wobei ein Ende der Druckfeder (7) mit der ersten Achse (Z1) verbunden ist und das andere Ende der Druckfeder (7) mit der dritten Achse (Z3) verbunden ist und/oder es sich bei der ersten Achse (Z1) und der dritten Achse (Z3) um Metallachsen handelt, während alle anderen Komponenten der Abdeckungsbetätigungs- und -selbstverriegelungsvorrichtung außer der ersten Achse (Z1) und der dritten Achse (Z3) aus einem Kunststoff hergestellt sind.

10. Abdeckungsbetätigungs- und -selbstverriegelungsvorrichtung nach Anspruch 1, wobei in der unteren Verriegelungsstellung, in der Richtung der oberen Oberfläche der Abdeckung (4), der Abstand zwischen der Anschlaggelenkachse und dem Abdeckungsanlenkpunkt (J4) 0,5 mm-3 mm beträgt, der Abstand zwischen dem Anlenkpunkt am festen Ende und dem Anlenkpunkt am freien Ende des ersten Hebels (1) 14 mm-20 mm beträgt, der Abstand zwischen dem Anlenkpunkt am oberen Ende und dem Anlenkpunkt am unteren Ende des zweiten Hebels (2) 31 mm-37 mm beträgt und, in der vertikalen Richtung der oberen Oberfläche der Abdeckung (4), der Abstand zwischen dem Anlenkpunkt am oberen Ende und dem Anlenkpunkt am unteren Ende des dritten Hebels (3) 20 mm-26 mm beträgt.

11. Getränkebrühvorrichtung, umfassend einen Brühbecher (8) und die Abdeckungsbetätigungs- und -selbstverriegelungsvorrichtung nach einem der Ansprüche 1-10, wobei eine nach innen zurückgesetzte Brühkammer in der oberen Oberfläche des Brühbechers (8) gebildet ist, eine Einstechnadel (11) an der Abdeckung (4), die als Brühkopf dient, befestigt ist; wobei in der unteren Verriegelungsstellung die Abdeckung (4) die Brühkammer des Brühbechers (8) auf gedichtete Weise abdeckt und die Einstechnadel (11) in die Brühkammer sticht.

12. Getränkebrühvorrichtung nach Anspruch 11, wobei Gleitnuten in der Unterseite des festen Rahmens (100) gebildet sind und der Brühbecher (8) entlang der Gleitnuten an der Unterseite des festen Rahmens (100) in Schubladenform gleitfähig befestigt ist und von der Unterseite des festen Rahmens (100) herausgleiten kann, wobei optional ein Dichtungsring (10) mit der Unterseite der Abdeckung (4) verbunden ist und eine obere ringförmige Auflageplattform (81) an der Brühkammer gebildet ist; wobei in der unteren Verriegelungsstellung der Betätigungsmechanismus den Dichtungsring (10) betätigt, um an die obere ringförmige Auflageplattform (81) zu drücken.

13. Getränkebrühsystem, umfassend ein Flüssigkeitszuführsystem, eine Getränkekapsel (9) und die Getränkebrühvorrichtung nach Anspruch 11 oder 12, wobei die Getränkekapsel (9) in der Brühkammer aufgenommen ist, es sich bei der Einstechnadel (11) um eine Hohlnadelröhre handelt, die mit einer Flüssigkeitsleitungsröhre des Flüssigkeitszuführsystem verbunden ist; wobei in der unteren Verriegelungsstellung die Einstechnadel (11) in die Getränkekapsel (9) sticht, um Flüssigkeit einzuspritzen, wobei optional der Flüssigkeitsdruck, mit dem die Einstechnadel (11) die Flüssigkeit in die Getränkekapsel (9) einspritzt, nicht niedriger als 15 bar ist.

14. Getränkebrühsystem nach Anspruch 13, wobei ein Dichtungsring (10) mit der Unterseite der Abdeckung (4) verbunden ist, die Getränkekapsel (9) eine Dichtungsfolie (91) für die obere Oberfläche umfasst, der Außendurchmesser der Dichtungsfolie (91) kleiner als der Außendurchmesser des Dichtungsrings (10) ist, eine obere ringförmige Auflageplattform (81) auf der Brühkammer gebildet ist und sich der Rand der Dichtungsfolie (91) in die ringförmige Auflagefläche der oberen ringförmigen Auflageplattform (81) erstreckt; wobei in der unteren Verriegelungsstellung das Betätigungssystem den Dichtungsring (10) betätigt, um an die ringförmige Auflagefläche zu drücken, wobei optional eine radial innenliegende Kante der ringförmigen Auflagefläche höher liegt als eine radial außenliegende Kante der ringförmigen Auflagefläche.

## Revendications

1. Dispositif d'actionnement et de verrouillage automatique de couvercle, comportant
un couvercle (4), comportant un point d'articulation de couvercle (J4) sur la surface supérieure de celui-ci ;
un cadre fixe (100), agencé avec une rainure d'arrêt (103) et un point d'articulation fixe (J1) ; et
un mécanisme d'actionnement, comportant un premier levier (1), un deuxième levier (2) et un troisième levier (3) qui sont articulés de manière séquentielle depuis l'extrémité avant jusqu'à l'extrémité arrière, une extrémité fixe du premier levier (1) est raccordée de manière articulée au point d'articulation fixe (J1), une extrémité inférieure du troisième levier (3) est raccordée de manière articulée au point d'articulation de couvercle (J4), un arbre d'articulation d'arrêt entre l'extrémité inférieure du deuxième levier (2) et l'extrémité supérieure du troisième levier (3) s'étend jusque dans la rainure d'arrêt (103) et coulisse dans la rainure d'arrêt (103) ; dans lequel, quand le premier levier (1) tourne autour du point d'articulation fixe (J1) dans une direction de rotation de verrouillage (w), il peut pousser l'arbre d'articulation d'arrêt par le biais du deuxième levier (2) à des fins de coulissement depuis une extrémité libre de la rainure d'arrêt (103) jusqu'à une extrémité de verrouillage (S) de la rainure d'arrêt (103), et peut pousser le couvercle (4) par le biais du troisième levier (3) à des fins de déplacement vers le bas depuis une position de verrouillage supérieure jusque sur une position de verrouillage inférieure ; au niveau de la position de verrouillage inférieure, le couvercle (4) est dans un état verrouillé de compression vers le bas ; quand une ligne raccordant un point d'articulation d'extrémité supérieure (J3) et un point d'articulation d'extrémité inférieure du troisième levier (3) tourne dans la direction de rotation de verrouillage (w), l'angle inclus de rotation (a) du point d'articulation d'extrémité supérieure (J3) n'est pas supérieur à 90 degrés au niveau de la position de verrouillage, dans lequel, au niveau de la position de verrouillage supérieure, dans la direction de la surface supérieure du couvercle (4), le point d'articulation fixe (J1) et l'arbre d'articulation d'arrêt se trouvent sur le même côté du point d'articulation de couvercle (J4) ; **caractérisé en ce que**, au niveau de la position de verrouillage inférieure, dans la direction de la surface supérieure du couvercle (4), le point d'articulation fixe (J1) se trouve au niveau d'un côté du point d'articulation de couvercle (J4), et l'arbre d'articulation d'arrêt au niveau de l'extrémité de verrouillage (S) de la rainure d'arrêt (103) se trouve au niveau de l'autre côté du point d'articulation de couvercle (J4).

2. Dispositif d'actionnement et de verrouillage automatique de couvercle selon la revendication 1, dans lequel la rainure d'arrêt (103) est une rainure droite, et la rainure d'arrêt (103) est parallèle par rapport à la surface supérieure du couvercle (4), ou l'extrémité libre de la rainure d'arrêt (103) se trouve au-dessus de l'extrémité de verrouillage (S), éventuellement, l'espacement entre le point d'articulation fixe (J1) et l'extrémité de verrouillage (S) de la rainure d'arrêt (103) n'est pas supérieur à la somme de la longueur du premier levier (1) et de la longueur du deuxième levier (2).

3. Dispositif d'actionnement et de verrouillage automatique de couvercle selon l'une quelconque des revendications 1 à 2, dans lequel le cadre fixe (100) comporte deux plaques de pinces de montage verticales qui font saillie vers le haut et qui sont espacées et parallèles l'une par rapport à l'autre, et le premier levier (1), le deuxième levier (2), le troisième levier (3), et le couvercle (4) sont situés entre les deux plaques de pinces de montage verticales.

4. Dispositif d'actionnement et de verrouillage automatique de couvercle selon la revendication 3, comportant un premier arbre (Z1) et un deuxième arbre (Z2) qui servent d'arbre fixe et un troisième arbre (Z3) qui sert d'arbre d'articulation d'arrêt, les deux plaques de pinces de montage verticales comportent des trous de montage d'arbre (104) qui correspondent au point d'articulation fixe (J1), les deux extrémités du premier arbre (Z1) pénètrent au travers des trous de montage d'arbre (104) dans les deux plaques de pinces de montage verticales, une extrémité libre du premier levier (1) et une extrémité supérieure du deuxième levier (2) sont raccordées de manière pivotante au deuxième arbre (Z2), et une extrémité inférieure du deuxième levier (2) et une extrémité supérieure du troisième levier (3) sont raccordées de manière pivotante au troisième arbre (Z3), éventuellement, le premier levier (1), le deuxième levier (2), et le troisième levier (3) sont tous des leviers doubles qui sont raccordés aux deux extrémités des arbres et qui sont espacés et parallèles les uns par rapport aux autres.

5. Dispositif d'actionnement et de verrouillage automatique de couvercle selon la revendication 4, dans lequel chacune des plaques de pinces de montage verticales comporte une fente de guidage de couvercle verticale (105), une tige coulissante (41) pénétrant au travers des fentes de guidage de couvercle (105) fait saillie depuis le couvercle (4), et, au niveau de la position de verrouillage inférieure, la tige coulissante (41) se trouve au niveau de l'extrémité inférieure des fentes de guidage de couvercle (105) ;
éventuellement, les fentes de guidage de couvercle (105) sont des fentes de coulissement arquées ; au niveau de la position de verrouillage inférieure, dans la direction de la surface supérieure du couvercle (4), les centres arqués des fentes de coulissement arquées et le point d'articulation fixe (J1) se trouvent au niveau du même côté du point d'articulation de couvercle (J4) ;
éventuellement, le dispositif comporte par ailleurs, des tiges de raccordement de couvercle (5), dans lequel une extrémité de chaque tige de raccordement de couvercle (5) est raccordée de manière articulée à la tige coulissante (41), et l'autre extrémité de la tige de raccordement de couvercle (5) est raccordée de manière articulée au niveau d'une position de la plaque de pince de montage verticale correspondant au centre arqué de la fente de coulissement arquée.

6. Dispositif d'actionnement et de verrouillage automatique de couvercle selon la revendication 5, dans lequel, au niveau de la position de verrouillage inférieure, les tiges de raccordement de couvercle (5) sont parallèles par rapport à la surface supérieure du couvercle (4), et/ou, la longueur des tiges de raccordement de couvercle (5) fait de 40 mm à 60 mm.

7. Dispositif d'actionnement et de verrouillage automatique de couvercle selon la revendication 5, comportant par ailleurs un quatrième arbre (Z4) pénétrant au travers de, et raccordé à, la surface supérieure du couvercle (4) dans la direction radiale du couvercle (4), et une extrémité inférieure du troisième levier (3) est raccordée de manière pivotante au quatrième arbre (Z4), éventuellement, la tige coulissante (41) est une partie d'extrémité du quatrième arbre (Z4).

8. Dispositif d'actionnement et de verrouillage automatique de couvercle selon la revendication 4, comportant par ailleurs un manche de fonctionnement (6) raccordé de manière fixe à l'extrémité fixe du premier levier (1) et en mesure d'entraîner le premier levier (1) à des fins de rotation autour du premier arbre (Z1) dans la direction de rotation de verrouillage (w) ou à des fins de rotation autour du premier arbre (Z1) dans le sens inverse dans une direction de rotation de déverrouillage, éventuellement, quand le couvercle (4) est au niveau de la position de verrouillage inférieure, le manche de fonctionnement (6) est parallèle par rapport au couvercle (4).

9. Dispositif d'actionnement et de verrouillage automatique de couvercle selon la revendication 4, comportant par ailleurs un ressort de compression (7), dans lequel une extrémité du ressort de compression (7) est raccordée au premier arbre (Z1), et l'autre extrémité du ressort de compression (7) est raccordée au troisième arbre (Z3), et/ou, le premier arbre (Z1) et le troisième arbre (Z3) sont des arbres métalliques, alors que tous les autres composants du dispositif d'actionnement et de verrouillage automatique de couvercle à l'exception du premier arbre (Z1) et du troisième arbre (Z3) sont réalisés à partir d'une matière plastique.

10. Dispositif d'actionnement et de verrouillage automatique de couvercle selon la revendication 1, dans lequel, au niveau de la position de verrouillage inférieure, dans la direction de la surface supérieure du couvercle (4), l'espacement entre l'arbre d'articulation d'arrêt et le point d'articulation de couvercle (J4) fait de 0,5 mm à 3 mm, l'espacement entre le point d'articulation d'extrémité fixe et le point d'articulation d'extrémité libre du premier levier (1) fait de 14 mm à 20 mm, l'espacement entre le point d'articulation d'extrémité supérieure et le point d'articulation d'extrémité inférieure du deuxième levier (2) fait de 31 mm à 37 mm, et, dans la direction verticale de la surface supérieure du couvercle (4), l'espacement entre le point d'articulation d'extrémité supérieure et le point d'articulation d'extrémité inférieure du troisième levier (3) fait de 20 mm à 26 mm.

11. Dispositif d'infusion de boisson, comportant une coupelle d'infusion (8) et le dispositif d'actionnement et de verrouillage automatique de couvercle selon l'une quelconque des revendications 1 à 10, dans lequel une chambre d'infusion en retrait vers l'intérieur est formée dans la surface supérieure de la coupelle d'infusion (8), une aiguille de perçage (11) est montée sur le couvercle (4) qui sert de tête d'infusion ; au niveau de la position de verrouillage inférieure, le couvercle (4) recouvre la chambre d'infusion de la coupelle d'infusion (8) de manière étanche, et l'aiguille de perçage (11) va percer jusque dans la chambre d'infusion.

12. Dispositif d'infusion de boisson selon la revendication 11, dans lequel des fentes de coulissement sont formées dans la partie inférieure du cadre fixe (100), et la coupelle d'infusion (8) est montée de manière coulissante le long des fentes de coulissement sur la partie inférieure du cadre fixe (100) en forme de tiroir et peut coulisser hors de la partie inférieure du cadre fixe (100), éventuellement, une bague d'étanchéité (10) est raccordée à la partie inférieure du couvercle (4), et une plateforme de support annulaire supérieure (81) est formée sur la chambre d'infusion ; au niveau de la position de verrouillage inférieure, le mécanisme d'actionnement actionne la bague d'étanchéité (10) à des fins de compression contre la plateforme de support annulaire supérieure (81).

13. Système d'infusion de boisson, comportant un système d'alimentation de liquide, une capsule de boisson (9), et le dispositif d'infusion de boisson selon la revendication 11 ou la revendication 12, dans lequel la capsule de boisson (9) est reçue dans la chambre d'infusion, l'aiguille de perçage (11) est un tube d'aiguille creuse et est raccordée à un tube de guidage de liquide du système d'alimentation de liquide ; au niveau de la position de verrouillage inférieure, l'aiguille de perçage (11) perce jusque dans la capsule de boisson (9) pour injecter du liquide, éventuellement, la pression du liquide à laquelle l'aiguille de perçage (11) injecte le liquide jusque dans la capsule de boisson (9) n'est pas inférieure à 15 bar.

14. Système d'infusion de boisson selon la revendication 13, dans lequel une bague d'étanchéité (10) est raccordée à la partie inférieure du couvercle (4), la capsule de boisson (9) comporte un film d'étanchéité (91) pour la surface supérieure, le diamètre extérieur du film d'étanchéité (91) est inférieur par rapport au diamètre extérieur de la bague d'étanchéité (10), une plateforme de support annulaire supérieure (81) est formée sur la chambre d'infusion, et le rebord du film d'étanchéité (91) s'étend jusque dans la surface de support annulaire de la plateforme de support annulaire supérieure (81) ; au niveau de la position de verrouillage inférieure, le mécanisme d'actionnement actionne la bague d'étanchéité (10) à des fins de compression contre la surface de support annulaire, éventuellement, un bord intérieur radial de la surface de support annulaire se trouve plus haut par rapport à un bord extérieur radial de la surface de support annulaire.
